# FASCICULE DE BREVET EUROPEEN

(11) **EP 1 046 176 B1**
(45) Date de publication et mention de la délivrance du brevet: **18.09.2002**
(21) Numéro de dépôt: 98962534.8
(22) Date de dépôt: 21.12.1998
(51) Int. Cl.: G21F 5/008

(54) **DISPOSITIF DE CALAGE TRANSVERSAL D'ASSEMBLAGES COMBUSTIBLES NUCLEAIRES A L'INTERIEUR D'EMBALLAGES DE TRANSPORT**
VORRICHTUNG ZUM SEITLICHEN FESTHALTEN VON KERNBRENNSTABBÜNDELN INNERHALB VON TRANSPORTPACKUNGEN
DEVICE FOR TRANSVERSE CUSHIONING OF NUCLEAR FUEL ASSEMBLIES INSIDE TRANSPORTING PACKAGES

(30) Priorité: 05.01.1998 FR 9800100
(43) Date de publication de la demande: 25.10.2000
(73) Titulaire: SOCIETE POUR LES TRANSPORTS DE L'INDUSTRIE NUCLEAIRE TRANSNUCLEAIRE, 75008 Paris (FR); COMPAGNIE GENERALE DES MATIERES NUCLEAIRES (COGEMA), 78141 Velizy-Villacoublay (FR)
(72) Inventeur: CHIOCCA, René, F-75019 Paris (FR); POTELLE, Frédéric, F-75003 Paris (FR); GARDIN, Jacques, F-95300 Pontoise (FR)
(74) Mandataire: Poulin, Gérard
(86) Numéro de dépôt international: FR9802810
(87) Numéro de publication internationale: WO99035651

(56) Documents cités:
- EP-A- 0 506 512
- DE-A- 3 010 521
- DE-A- 19 631 179
- DATABASE WPI Section Ch, Week 8533 Derwent Publications Ltd., London, GB; Class A97, AN 85-200956 XP002081194 & JP 60 127499 A (NIPPON NUCLEAR FUELS KK) , 8 juillet 1985
- DATABASE WPI Section Ch, Week 8848 Derwent Publications Ltd., London, GB; Class K05, AN 88-342482 XP002081195 & JP 63 255693 A (MITUBISHI GENSHI NE) , 21 octobre 1988

## Description

### DOMAINE TECHNIQUE

L'invention concerne un dispositif pour caler transversalement les assemblages combustibles nucléaires dans leur emballage de transport.

### ETAT DE LA TECHNIQUE ET PROBLEME POSE

Habituellement les assemblages combustibles neufs à base d'oxyde d'uranium, de grande longueur et de forme prismatique, destinés aux centrales électronucléaires, par exemple du type PWR ou BWR, sont transportés dans des emballages ou conteneurs relativement légers (poids total chargé n'excédant pas 5 t).

En général l'emballage contient 2 à 4 assemblages disposés dans des logements ou berceaux de façon telle qu'on peut avoir un accès direct sur toute la longueur desdits assemblages.

Grâce à cet accès direct il est possible de caler transversalement les assemblages dans leur berceau à l'aide de dispositifs, généralement situés au niveau des grilles d'espacement, réglables individuellement. Ce calage permet en particulier de garantir l'intégrité des assemblages qui ne doivent pas subir, au cours du transport ou des manutentions, de sollicitation supérieure à la limite admissible imposée par le concepteur du modèle d'assemblage.
En outre, grâce à l'accès direct. les différents problèmes techniques aue pose la sûreté de ces transports (criticité, blindage. thermique, mécanique) sont résolus de façon simple.

Cependant l'emploi récent et tendant à se généraliser de combustibles mixtes. c'est-à-dire contenant un mélange d'oxydes d'uranium et de plutonium, amène à renforcer les mesures de sécurité de leur transport, en particulier pour le transport outre-mer.
Ainsi ce transport doit être maintenant effectué dans des conteneurs lourds, à parois épaisses, de la classe 100 t, du type de ceux utilisés pour le transport des assemblages irradiés.

Ces conteneurs lourds comprennent une virole cylindrique épaisse (généralement 20 à 40 cm environ). en acier ou en fonte, de grande longueur, possédant à une de ses extrémités un fond épais fixé définitivement et pouvant être fermé à l'autre extrémité par un ou plusieurs couvercles amovibles épais. Leur chargement est effectué par l'extrémité obturable.

La cavité du conteneur comprend généralement un casier de rangement comportant des alvéoles de grande longueur parallèles à l'axe du conteneur. chacune d'elles étant conformée au type d'assemblage combustible devant y être logé.

Compte tenu du fait que le chargement se fait par une extrémité du conteneur, il est impossible d'avoir un accès direct à toute la longueur de l'assemblage et d'effectuer comme antérieurement le calage transversal des assemblages combustibles dans leurs alvéoles.

La demanderesse a ainsi recherché un dispositif permettant de caler transversalement les assemblages combustibles à partir de l'extrémité ouverte du conteneur, après avoir mis en place chaque assemblage dans une alvéole.

### DESCRIPTION DE L'INVENTION

L'invention est un dispositif de calage transversal d'un assemblage combustible nucléaire de grande longueur logé dans une alvéole de même longueur délimitée par des parois, caractérisé en ce qu'il comprend:
- une structure fixe solidaire de l'alvéole, située sur une de ses faces et comportant au moins un élément de guidage transversal par rapport à la grande longueur de l'assemblage.
- une structure mobile transversalement pouvant s'appuyer sur l'assemblage combustible et comportant au moins un élément de guidage transversal coopérant avec celui de la structure fixe,
- un moyen de serrage réglable comportant au moins un élément de serrage réglable permettant de serrer ou desserrer la structure mobile sur l'assemblage combustible à l'aide d'un dispositif de réglage, et un organe de commande manipulable à partir d'une extrémité d'accès à l'assemblage combustible. ledit organe de commande agissant sur l'élément de serrage ou son dispositif de réglage pour assurer le serrage par réaction sur la structure fixe ou le desserrage.

La structure fixe peut être un profilé, ou des segments de profilés, fixé(s) solidairement le long de l'alvéole. Elle peut également faire partie intégrante de l'alvéole.

La structure mobile comporte généralement une plaque plane parallèle à une face de l'alvéole; habituellement c'est une portion découpée de la paroi de l'alvéole. Pour effectuer le calage de l'élément combustible elle prend généralement appui sur la structure fixe et vient se presser sur Les grilles d'espacement desdits assemblages combustibles, ce qui permet de répartir la force de serrage sur toute la longueur dudit assemblage.

Le moyen de serrage comporte habituellement plusieurs éléments de serrage. avec leur dispositif de réglage, identiques.

Les éléments de serrage peuvent être rigides ou de préférence élastiques (lame ressort). Ils peuvent être solidaires de la structure fixe ou mobile ou de l'organe de commande. Il en est de même des dispositifs de réglage avec lesquels ils coopèrent. Selon la position relative des éléments de serrage et de leur dispositif de réglage on peut régler la force de serrage ou effectuer le desserrage.

L'organe de commande peut agir simultanément sur l'ensemble des éléments de serrage ou des dispositifs de réglage. Il est manoeuvrable de l'extérieur de l'alvéole contenant l'assemblage combustible; typiquement, il débouche à une de ses extrémités : celle qui est située du coté de l'ouverture obturable du conteneur renfermant les alvéoles. Ainsi il n'est pas nécessaire d'avoir accès à toute la longueur des assemblages installés dons leurs alvéoles pour en assurer le calage.

L'organe de commande peut être manoeuvré mécaniquement, hydrauliquement ou élecfriquement. Les organes de commande de plusieurs alvéoles peuvent être regroupés.

Les structures fixe et mobile peuvent être avantageusement reliées l'une à l'autre par des ressorts de rappel permettant de faciliter la manoeuvre de desserrage nécessaire à l'extraction de l'assemblage de son alvéole.
En général les structures fixes et mobiles sont situées sur une même paroi de l'alvéole.

Les éléments de guidage transversal sont généralement cylindriques et coulissent l'un dans l'autre; ils comportent une partie mâle et une partie femelle, l'une étant sur la structure fixe et l'autre sur la structure mobile; ils peuvent aussi être des glissières. ou des éléments de glissière répartis le long des structures fixe et mobile ou tout autre système équivalent.

Une alvéole peut comporter un ou plusieurs dispositifs de calage situés respectivement sur une ou plusieurs de ses faces, de façon à assurer un calage transversal de l'assemblage dans toutes les directions. Ainsi quand l'alvéole a une section droite carrée, il est avantageux de mettre un dispositif de calage sur deux faces adjacentes.

Dans un conteneur du type lourd comme décrit plus haut, on met généralement en place une pluralité d'alvéoles avec leurs dispositifs de calage manipulables et réglables à partir de l'extrémité ouverte dudit conteneur. Les alvéoles peuvent être rendues solidaires les unes des autres pour former un casier de grande longueur à structure alvéolaire, chaque alvéole comportant au moins un dispositif de calage. Les alvéoles ont une section droite correspondant à celle de l'assemblage devant y être logé.

Les figures 1 à 4 permettent de mieux comprendre et illustrer l'invention:
- les figures 1a et 1b montrent les coupes respectivement transversale et longitudinale d'une alvéole où un seul ensemble d'éléments de guidage et de moyens de serrage selon l'invention ont été représentés, alors qu'en général plusieurs de ces dispositifs sont installés le long de l'alvéole.
- les figures 2-3-4 représentent successivement trois variantes de réalisation pratique des moyens de serrage avec leur commande reportée à distance à l'extrémité de l'assemblage, selon l'invention.

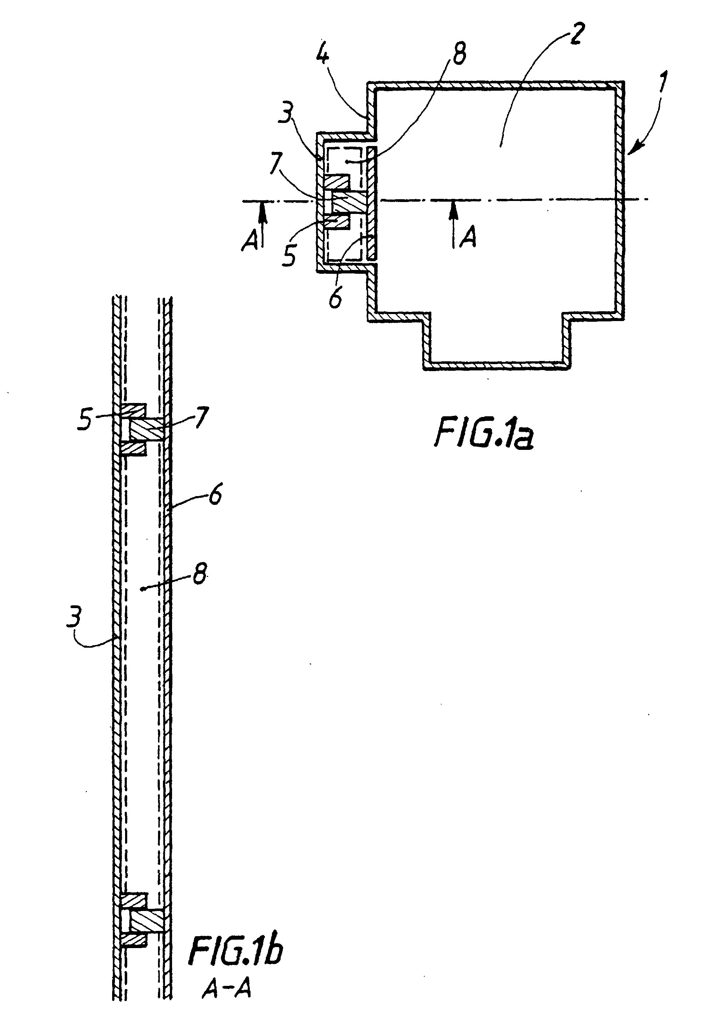

Dons la figure 1, on voit en (1) une alvéole et en (2) le logement dans lequel prend place un assemblage combustible (non représenté) de section carrée.
La structure fixe (3) est assujettie solidairement sur une paroi (4) de l'alvéole. Un élément de guidage transversal femelle (5) y est fixé.
La structure mobile transversalement (6). qui est une plaque plane parallèle à l'assemblage, remplace de préférence en partie la paroi de l'alvéole, ou parfois en totalité. Un élément de guidage transversal mâle (7) y est fixé et coopère avec l'élément de guidage femelle (5) de la structure fixe (3). Habituellement cette structure mobile effectue le calage de l'assemblage combustible en appuyant sur ses grilles d'espacement.
Le moyen de serrage réglable avec son organe de commande à distance est schématiquement représenté en (8) et est situé entre les structures fixe et mobile.

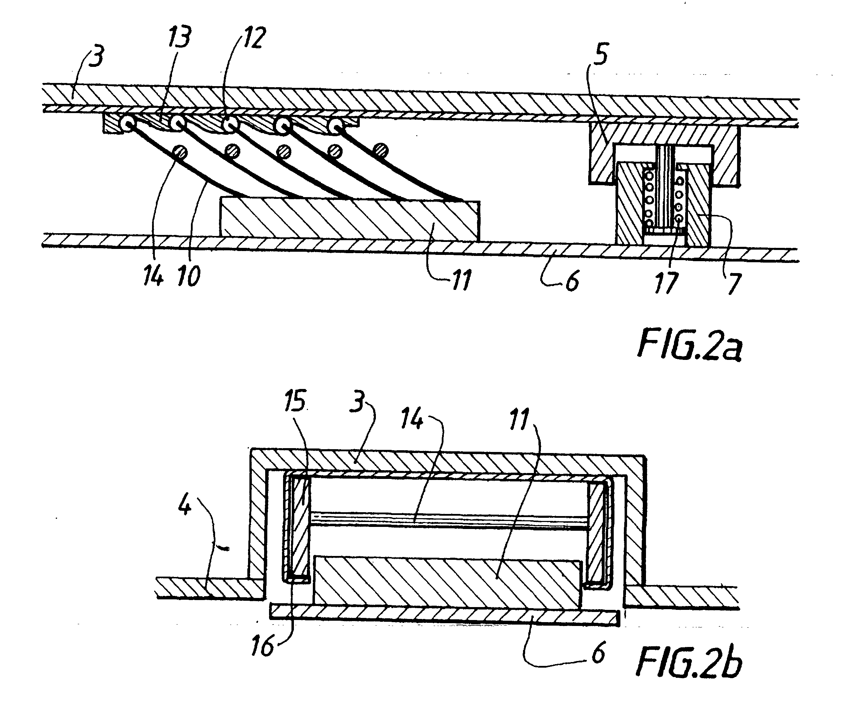

Les figures 2a (coupe longitudinale) et 2b (coupe transversale) représentent une première variante de réalisation du moyen de serrage réglable avec son organe de commande à distance.

On voit un élément de serrage sous forme d'une ou plusieurs lames ressorts (10) séparées les unes des autres, dont une extrémité libre vient en appui sur une platine (11), fixée solidairement sur la structure mobile transversalement (6). et l'autre extrémité est solidaire de la structure fixe (3) par l'intermédiaire d'une articulation (12) et de son support (13). L'effort de serrage réglable est effectué en appuyant sur chacune des lames de ressort (10) à l'aide du dispositif de réglage comportant autant de barreaux (14) fixés rigidement au moins par une de leurs extrémités à un montant (15) parallèle au grand axe des assemblages. déplaçable dans cette direction dite longitudinale servant d'organe de commande. L'extrémité du montant (15) débouche à l'extrémité libre de l'alvéole située du côté de l'ouverture du conteneur.

Ainsi, on voit qu'en manipulant longitudinalement l'organe de commande (14, 15) rigide on peut régler le serrage de l'assemblage combustible à partir de l'extrémité ouverte du conteneur. en appuyant plus ou moins sur les lames (10).

Pour déplacer longitudinalement le montant (15), on peut le faire coulisser dons un profilé (16) de forme adaptée, solidaire de la structure fixe (3).

Plusieurs ensembles de serrage comportant des lames (10), leur fixation articulée (12, 13) et la platine d'appui (11) sont généralement disposés le long de l'alvéole, l'organe de commande comportant alors autant de jeux de barreaux (14). De même il est parfois avantageux, de façon générale, de disposer deux organes de commande avec les éléments et les dispositifs de serrage associés, parallèlement sur une même face d'alvéole.

Sur la figure 2a on voit également un dispositif de guidage transversal comportant un élément de guidage mâle (7) fixé sur la structure mobile (6), l'élément de guidage femelle (5) correspondant se trouvant assujetti sur la structure fixe (3); un dispositif à ressort de rappel est représenté en (17) .

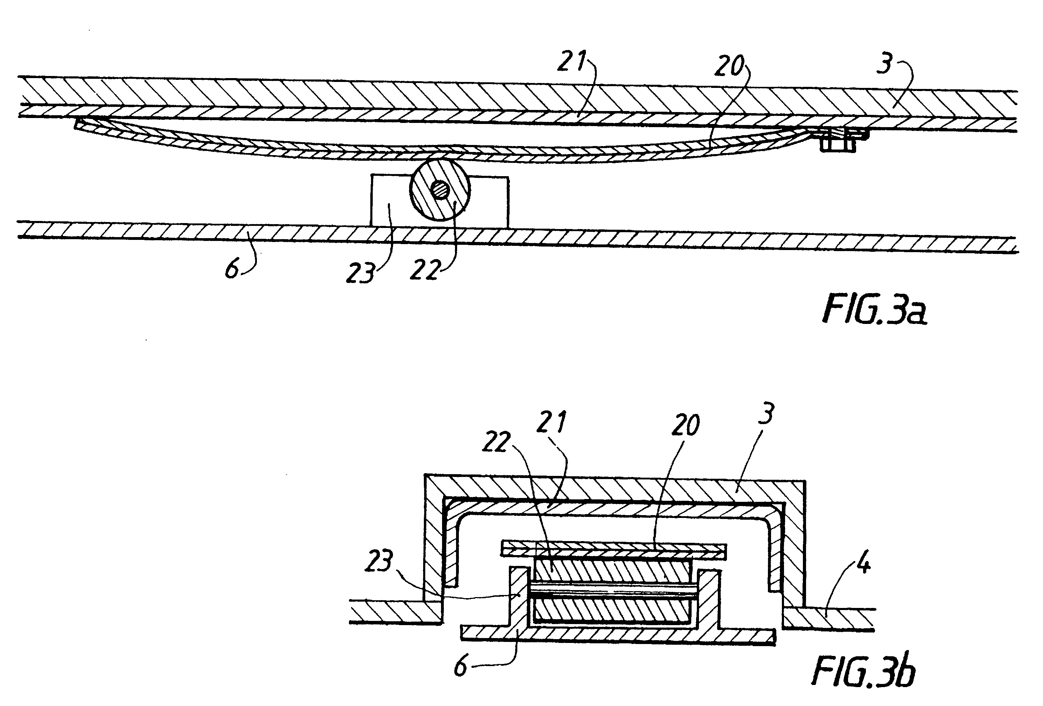

Les figures 3a (coupe longitudinale) et 3b (coupe transversale) représentent une deuxième variante de réalisation du moyen de serrage réglable avec son organe de commande à distance.

Le moyen de serrage comprend au moins un élément de serrage comportant un ressort à lames incurvé (20), de forme allongée, disposé longitudinalement: sa face convexe est située en regard de la structure (6) mobile transversalement (constituée généralement par la paroi, ou des parties de la paroi, de l'alvéole, comme cela a été déjà vu); il est fixé à une de ses extrémités sur un support (21) coulissant longitudinalement, débouchant à l'extrémité accessible de l'alvéole contenant l'assemblage combustible et manipulable ainsi à partir de l'extrémité ouverte du conteneur. Ce support (21) prend appui sur la structure fixe (3) solitaire de l'alvéole (4). L'autre extrémité du ressort à lames (20) demeure libre et prend appui sur ladite structure fixe de préférence par l'intermédiaire du support (21).

Le dispositif de réglage contribuant à caler l'assemblage dans l'alvéole comprend essentiellement un rouleau (22) et son support (23) fixé rigidement à la structure mobile (6), le rouleau étant disposé de telle façon qu'il prenne appui sur, et coopère avec, la face convexe du ressort à lames (20) pour assurer le déplacement transversal de la structure mobile (6) et le serrage réglable de l'assemblage combustible.
On voit qu'ainsi on peut régler le serrage de l'extérieur du conteneur en faisant coulisser plus ou moins le support (21) pour assurer une pression plus ou moins forte sur le rouleau (22) et donc sur la structure mobile (6).

Comme précédemment plusieurs ensemble de serrage de ce type peuvent être répartis le long de l'alvéole. Les moyens du guidage transversal, qui peuvent être semblables à ceux de la figure 2a, n'ont pas été représentés.

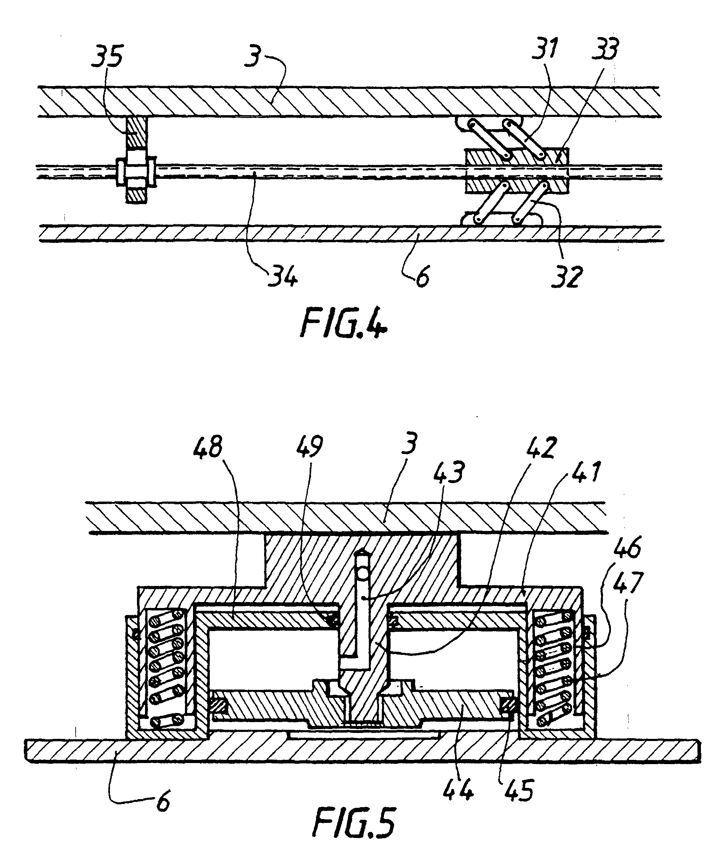

La figure 4 (coupe longitudinale) représente une troisième variante de réalisation du moyen de serrage réglable avec son organe de commande à distance.

Ce moyen de serrage comprend essentiellement au moins une paire de biellettes (31, 32) (ici deux paires sont représentées) dont une des extrémités est fixée, à l'aide d'une articulation, sur un manchon (33) mobile longitudinalement servant de dispositif de réglage. L'autre extrémité de la biellette dite «fixe» (31), est solidaire de la structure fixe (3) par le biais également d'une articulation, tandis que l'autre extrémité de la biellette dite « mobile » (32) est solidaire de la structure mobile (6) encore par le biais d'une articulation. Les biellettes (31, 32) sont positionnées de façon à ce qu'elles forment un V et peuvent avantageusement être des lames ressorts.

Le manchon (33) est déplacé longitudinalement par tout moyen déboucnant à l'extrémité accessible de l'alvéole, avantageusement à l'aide d'une vis sans fin (34) ne se déplaçant pas longitudinalement, solidaire par exemple de la structure fixe (3); la dite vis sans fin (34) coopère alors avec un pas de vis taraudé dans un passage axial du manchon (33). Le support de la vis sans fin (34) dans sa direction longitudinale peut être réalisé a l'aide d'au moins un bras de maintien (35) comportant un alésage oblong permettant à la vis sans fin (34) le traversant de se déplacer transversalement dans une direction perpendiculaire aux structures fixe (3) et mobile (6). Le bras de maintien (35) avec son alésage oblong coopère avec un palier situé sur ladite vis (34) entre deux butées l'immobilisant longitudinalement.

On voit que la rotation, sans déplacement longitudinal, de la vis (34) commandée de l'extérieur du conteneur entraîne l'ouverture plus ou moins grande du V formé par les biellettes (31, 32) et permet ainsi de régler le serrage de l'assemblage combustible.

Comme précédemment plusieurs dispositifs comportant des manchons (33) avec leurs biellettes (31, 32) peuvent être disposés le long de l'alvéole et les moyens de guidage transversal, qui peuvent être semblables à ceux de la figure 2a, n'ont pas été représentés.

Cependant, pour remplacer ces derniers, on peut avantageusement munir les biellettes (31, 32), généralement à leur extrémité articulée sur le manchon (33). d'un dispositif coopérant avec la vis sans fin (34) (par exemple un secteur de roue dentée) permettant d'imposer au V formé par les biellettes (31, 32) un angle variable en fonction de la position du manchon (33) et ainsi d'assurer à la fois le guidage transversal et le serrage de la structure mobile (6).

La figure 5 (coupe longitudinale) représente une quatrième variante de réalisation du moyen de serrage réglable avec son organe de commande à distance.

Ce moyen à commande pneumatique comprend essentiellement un corps de vérin (41) cylindrique, d'axe transversal, solidaire de la structure fixe (3) et comportant dans son axe une tige guide (42) dans laquelle a été percé dans son axe un canal (43) d'amenée d'un gaz comprimé débouchant à son extrémité.

Un piston (44) fixe est solidaire de ladite extrémité de la tige guide (42); il comporte à sa périphérie des joints d'étanchéité (45).
Le corps de vérin (41) comporte à sa périphérie une pluralité de chambres (46) cylindriques, d'axe parallèle à celui du piston: dans chacune des chambres prend place un ressort (47) de compression.

A l'intérieur du corps de vérin (41), une coupelle (48) mobile est ajustée à la forme dudit corps de vérin; cette coupelle est intercalée entre le piston fixe (44) et le corps de vérin (41) et coulisse le long de la tige guide (42) grâce à un alésage correspondant pratiqué dans ladite coupelle (48).
La coupelle (48) comporte encore, à sa périphérie une pluralité de logements s'emboîtant de façon ajustée sur chacune des chambres (46).
La coupelle qui se meut transversalement par rapport à la grande longueur de l'assemblage combustible est solidaire de la structure mobile (6).

Un gaz comprimé, typiquement de l'air. peut être introduit dans l'espace situé entre le piston fixe (44) et la coupelle mobile (48) par le canal (43). L'étanchéité est assurée par les joints (45) situés en périphérie du piston fixe (44) et par un joint (49) situé dans l'alésage de la coupelle (48) et s'appuyant sur la tige guide (42).

On voit que ce sont les ressorts (47) qui assurent le serrage de la structure mobile (6) sur l'assemblage combustible, et que le gaz comprimé sert à le desserrer et/ou à régler la force de serrage en contrebalançant l'effort apporté par les ressorts (47). On voit également que l'alimentation et le réglage du gaz comprimé peut aisément être effectué à partir de l'extrémité ouverte du conteneur.

Un avantage particulier à ce dispositif est qu'il combine les moyens de guidage transversal de la structure mobile (6) et les moyens de serrage.
Comme précédemment encore, plusieurs dispositifs de ce genre sont généralement répartis le long de l'alvéole.

Une variante de ce dispositif consiste à l'adapter pour que ce soit le gaz comprimé, par exemple introduit entre la coupelle mobile et le corps de vérin, qui assure le serrage de ladite coupelle mobile qui est alors modifiée pour que ledit espace soit étanche et que des ressorts de rappel assure le desserrage.

D'autres variantes du moyen de serrage réglable selon l'invention peuvent être réalisés. On peut par exemple utiliser un organe de commande comprenant une tige ou une vis sans fin débouchant à l'extrémité libre de l'alvéole, comme dans la troisième variante ci-dessus, sur laquelle sont assujetties des cames de serrage qui viennent s'appuyer sur la structure mobile quand on manoeuvre ladite tige ou vis.

## Revendications

1. Dispositif de calage transversal d'un assemblage combustible nucléaire de grande longueur logé dans une alvéole de même longueur ayant plusieurs parois, **caractérisé en ce qu'**il comprend :
- une structure fixe (3) solidaire de l'alvéole, située sur une de ses faces et comportant au moins un élément de guidage (5) transversal par rapport à la grande longueur de l'assemblage,
- une structure mobile (6) transversalement pouvant s'appuyer sur l'assemblage combustible et comportant au moins un élément de guidage (7) transversal coopérant avec celui (5) de la structure fixe (3).
- un moyen de serrage réglable (8) comportant au moins un élément de serrage (10, 20, 31, 32, 47) réglable permettant de serrer ou desserrer la structure mobile (6) sur l'assemblage combustible à l'aide d'un dispositif de réglage (14, 22, 33, 48), et un organe de commande (15, 21, 34, 43) manipulable à partir d'une extrémité d'accès à l'assemblage combustible, ledit organe de commande agissant sur l'élément de serrage ou son dispositif de réglage pour assurer le serrage par réaction sur la structure fixe (3), ou le desserrage.

2. Dispositif selon la revendication 1 **caractérisé en ce que** la structure mobile (6) comprend une plaque plane parallèle à l'assemblage combustible remplaçant au moins en partie une paroi de l'alvéole.

3. Dispositif selon l'une quelconque des revendications 1 ou 2 **caractérisé en ce que** les éléments de serrage (10,20,31,32,47) sont élastiques.

4. Dispositif selon l'une quelconque des revendications 1 à 3 **caractérisé en ce que** les éléments de guidage (5, 7) fixés sur les structures fixe (3) et mobile (6) coulissent l'un dans l'autre.

5. Dispositif selon l'une quelconque des revendications 1 à 4 **caractérisé en ce que** les structures fixe (3) et mobile (6) sont reliées par un ressort de rappel (17).

6. Dispositif selon l'une quelconque des revendications 1 à 5 **caractérisé en ce que**
au moins un élément de serrage comprend une ou plusieurs lames ressort (10) séparées les unes des autres, dont une extrémité libre vient en appui sur une platine (11) fixée solidairement sur la structure (6) mobile transversalement et l'autre extrémité est solidaire de la structure fixe (3) par l'intermédiaire d'une articulation (12) et de son support (13),
le dispositif de réglage comprend autant de barreaux (14) qu'il y a de lames (10) fixés rigidement au moins par une de leurs extrémités à l'organe de commande comprenant un montant (15) parallèle au grand axe des assemblages combustibles, déplaçable dans cette direction et débouchant à l'extrémité accessible de l'alvéole, chacun desdits barreaux (14) s'appuyant sur une lame ressort (10).

7. Dispositif selon revendication 6 **caractérisé en ce que** le montant (15) coulisse à l'intérieur d'un profilé (16) solidaire de la structure fixe (3).

8. Dispositif selon l'une quelconque des revendications 1 à 5 **caractérisé en ce que**:
au moins un élément de serrage comporte un ressort à lames incurvé (20), de forme allongée, disposé longitudinalement, ayant une face convexe située en regard de la structure (6) mobile transversalement et appuyant sur un dispositif de réglage comportant un rouleau (22) fixé à ladite structure mobile (6) par l'intermédiaire d'un support (23),
l'organe de commande comporte un support (21) coulissant longitudinalement, débouchant à l'extrémité accessible de l'alvéole et prenant appui sur la structure fixe (3). le ressort à lames (20) étant fixé par une de ses deux extrémités sur ledit support (21) son autre extrémité étant libre et prenant appui sur ledit support (21).

9. Dispositif selon l'une quelconque des revendications 1 à 5 **caractérisé en ce que** :
. au moins un élément de serrage comporte au moins une paire de biellettes. l'une étant dite « fixe » (31) l'autre « mobile» (32), dont une de leurs extrémités est fixée à l'aide d'une articulation sur un manchon (33) mobile longitudinalement, l'autre extrémité de la biellette dite «fixe» (31) étant solidaire de la structure fixe (3) à l'aide d'une articulation , l'autre extrémité de la biellette dite «mobile» (32) étant fixée sur la structure mobile (6) à l'aide d'une articulation, les biellettes (31, 32) étant positionnées de façon à ce qu'elles forment un V d'angle variable,
. l'organe de commande (34) est solidaire de la structure fixe (3) et permet d'actionner longitudinalement le manchon (33) à partir de l'extrémité accessible de l'alvéole.

10. Dispositif selon la revendication 9 **caractérisé en ce que** l'organe de commande comprend une vis sans fin (34) supporté dans sa direction longitudinale et coopérant avec un pas de vis taraudé dans un passage axial du manchon (33).

11. Dispositif selon l'une quelconque des revendications 1 à 5 **caractérisé en ce que** les éléments de guidage (5, 7) transversal et les moyens de serrage (8) réglable sont combinés.

12. Dispositif selon les revendications 9, 11 **caractérisé en ce que** les moyens de guidage transversal et de serrage combinés comprennent un dispositif solidaire des biellettes (31, 32) coopérant avec l'organe de commande (34) pour imposer au V formé par les biellettes (31, 32) un angle fonction de la position du manchon (33).

13. Dispositif selon la revendication 11 **caractérisé en ce que** les éléments de guidage et les moyens de serrage réglable combinés comprennent :
. un corps de vérin (41) cylindrique d'axe transversal, solidaire de l'a structure fixe (3), comportant dans son axe une tige guide (42) dans laquelle a été percé un canal (43) d'amenée d'air comprimé débouchant à son extrémité libre, à sa périphérie une pluralité de chambres (46) cylindriques d'axe parallèle à celui du vérin, chacune des chambres (46) contenant un ressort (47) de compression,
. un piston (44) fixe solidaire de ladite extrémité libre de la tige guide (42) comportant à sa périphérie un joint d'étanchéité (45),
. une coupelle (48) mobile solidaire de la structure mobile (6), situé à l'intérieur du corps de vérin (41) et ajusté à la forme dudit corps de vérin, cette coupelle étant intercalée entre le piston fixe (44) et le corps de vérin (41) et coulissant le long de la tige guide (42) grâce à un alésage correspondant pratiqué dans ladite coupelle (48), ladite coupelle comportant encore, à sa périphérie, une pluralité de logements (49) s'emboîtant de façon ajustée sur chacune des chambrés (46) se mouvant transversalement par rapport à la grande longueur de l'assemblage combustible,
. un moyen d'alimentation en gaz comprimé débouchant à l'extrémité accessible de l'alvéole et amenant le gaz dans l'espace situé entre le piston fixe (44) et la coupelle mobile (48) par le canal (43).
les ressorts (47) assurant le serrage de la structure mobile sur l'assemblage combustible.

14. Dispositif selon l'une quelconque des revendications 1 à 5 **caractérisé en ce que** le moyen de serrage (8) réglable comprend un organe de commande débouchant à l'extérieur de l'alvéole sur lequel sont assujetties des cames venant s'appuyer sur la structure mobile (6).

15. Alvéole pour le logement d'un assemblage combustible nucléaire **caractérisée en ce qu'**elle est équipée d'un ou plusieurs dispositifs de calage selon les revendications 1 à 14.

16. Conteneur de transport d'assemblages combustibles nucléaires **caractérisé en ce qu'**il comporte une pluralité d'alvéoles selon la revendication 15.

## Claims

1. Device for transverse immobilization of a long nuclear fuel assembly housed in a compartment of the same length with several walls, **characterized in that** it comprises:
- a fixed structure (3) rigidly attached to the compartment, located on one of its surfaces and comprising at least one guide element (5) transverse to the longitudinal direction of the assembly,
- a structure (6) that can be moved in the transverse direction, capable of applying pressure on the fuel assembly and comprising at least one transverse guide element (7) working in cooperation with the element (5) on the fixed structure (3),
- an adjustable clamping means (8) comprising at least one adjustable clamping element (10, 20, 31, 32, 47) capable of clamping or unclamping the mobile structure (6) on the fuel assembly using an adjustment device (14, 22, 33, 48) and a control device (15, 21, 34, 43) that can be manipulated from an access end to the fuel assembly, the said control device acting on the clamping element or its adjustment device to fix the assembly in position by reaction on the fixed structure (3), or to release it.

2. Device according to claim 1, **characterized in that** the mobile structure (6) comprises a plane plate parallel to the fuel assembly replacing at least part of the compartment wall.

3. Device according to any one of claims 1 or 2, **characterized in that** the clamping elements (10, 20, 31, 32, 47) are elastic.

4. Device according to any one of claims 1 to 3, **characterized in that** the guide elements (5, 7) fixed on the fixed structure (3) and the mobile structure (6) slide in each other.

5. Device according to any one of claims 1 to 4, **characterized in that** the fixed structure (3) and the mobile structure (6) are connected together by a return spring (17).

6. Device according to any one of claims 1 to 5, **characterized in that**:
at least one clamping element comprises one or several spring leaves (10) separated from each other, of which a free end bears on a plate (11) rigidly attached to the structure (6) that moves in the transverse direction, and the other end is rigidly attached to the fixed structure (3) by means of a hinge pin (12) and its support (13),
the adjustment device comprises one bar (14) for each leaf (10), rigidly fixed at at least one of its ends to the control device comprising an upright (15) parallel to the major axis of the fuel assemblies, which can be moved along this direction and projecting from the accessible end of the compartment, each of the said bars (14) being supported on a spring leaf (10).

7. Device according to claim 6, **characterized in that** the upright (15) slides inside a section (16) rigidly attached to the fixed structure (3).

8. Device according to any one of claims 1 to 5, **characterized in that**:
at least one clamping element comprises a curved spring leaf (20) with an elongated shape, placed longitudinally with a convex surface facing the mobile structure (6) that is free to move in the transverse direction and supported on an adjustment device comprising a roll (22) fixed to the said mobile structure (6) through a support (23),
the control device comprises a support (21) free to slide longitudinally, projecting from the accessible end of the compartment and bearing on the fixed structure (3), the leaf spring (20) being fixed at one of its ends on the said support (21), the other end being free and bearing on the said support (21).

9. Device according to any one of claims 1 to 5, **characterized in that**:
at least one clamping element comprises at least one pair of connecting rods, one being called the "fixed" rod (31) and the other the "mobile" rod (32), one of their ends being fixed to a sleeve (33) moving in the longitudinal direction, using a hinge, the other end of the "fixed" rod (31) being rigidly attached to the fixed structure (3) by means of a hinge, the other end of the "mobile" rod (32) being rigidly attached to the mobile structure (6) by means of a hinge, the rods (31, 32) being positioned such that they form a V with a variable angle;
the control device (34) is rigidly attached to the fixed structure (3) and is used to activate the sleeve (33) longitudinally starting from the accessible end of the compartment.

10. Device according to claim 9, **characterized in that** the control device comprises a worm screw (34) which is supported longitudinally and which cooperates with a tapped screw thread in an axial passage of the sleeve (33).

11. Device according to any one of claims 1 to 5, **characterized in that** the transverse guide elements (5, 7) and the adjustable clamping means (8) are combined.

12. Device according to claims 9, 11, **characterized in that** the combined transverse guide and clamping means comprise a device fixed to the connecting rods (31, 32) that cooperates with the control device (34) to impose an angle on the V formed by the connecting rods (31, 32) that depends on the position of the sleeve (33).

13. Device according to claim 11, **characterized in that** the combined guide elements and the adjustable clamping means comprise:
a cylindrical jack body (41) with a transverse axis, rigidly attached to the fixed structure (3) comprising a guide rod (42) in which a compressed air inlet duct (43) has been formed along its axis projecting from its free end, a plurality of cylindrical chambers (46) at its periphery with an axis parallel to the jack axis, each of the chambers (46) containing a compression spring (47),
a fixed piston (44) rigidly attached to the said free end of the guide rod (42) comprising a seal (45) at its periphery,
a mobile collar (48) rigidly attached to the mobile structure (6) located inside the jack body (41) and adjusted to the shape of the said jack body, this collar being inserted between the fixed piston (44) and the jack body (41) and sliding along the guide rod (42) along a corresponding bore formed in the said collar (48), the said collar also comprising at its periphery a plurality of housings (49) that nest in an adjusted manner into each of the chambers (46) by moving transversely to the longitudinal direction of the fuel assembly,
a compressed gas supply means opening at the accessible end of the compartment and carrying gas into the space located between the fixed piston (44) and the mobile collar (48) through the duct (43), the springs (47) clamping the mobile structure onto the fuel assembly.

14. Device according to any one of claims 1 to 5, **characterized in that** the adjustable clamping means (8) comprises a control device opening to the outside of the compartment which controls the cams which bear on the mobile structure (6).

15. Compartment for housing a nuclear fuel assembly, **characterized in that** it is equipped with one or several immobilization devices according to claims 1 to 14.

16. Container for the transport of nuclear fuel assemblies, **characterized in that** it comprises a plurality of compartments according to claim 15.

## Patentansprüche

1. Vorrichtung zum transversalen Feststellen einer Anordnung nuklearen Brennstoffs großer Länge, der in einer Zelle gleicher Länge mit mehreren Wänden untergebracht ist, **dadurch gekennzeichnet, dass** sie umfasst:
- eine mit der Zelle einstückige bzw. fest verbundene, feststehende Struktur (3), die auf einer ihrer Seitenflächen gelegen ist und mindestens ein in Bezug auf die große Länge der Anordnung transversales Führungselement (5) umfasst,
- eine bewegliche Struktur (6), die sich transversal an der Brennstoffanordnung abstützen kann und mindestens ein transversales Führungselement (7) aufweist, das mit dem (5) der feststehenden Struktur (3) zusammenwirkt,
- ein regelbares Feststell- bzw. Spannmittel (8) mit mindestens einem regelbaren Feststellelement (10;20;31,32;47), das ein Feststellen oder Lösen der beweglichen Struktur (6) an der Brennstoffanordnung mittels einer Regelvorrichtung (14;22;33;48) ermöglicht, sowie einem Steuerelement (15;21;34;43), das über ein Zugangsende zu der Brennstoffanordnung manipulierbar ist, wobei das Steuerelement auf das Feststellelement oder seine Regelvorrichtung einwirkt, um das Feststellen durch Reaktion auf die feststehende Struktur (3) oder das Loslösen sicherzustellen.

2. Vorrichtung nach Anspruch 1, **dadurch gekennzeichnet, dass** die bewegliche Struktur (6) eine ebene, zur Brennstoffanordnung parallele Platte umfasst, die zumindest teilweise eine Wand der Zelle ersetzt.

3. Vorrichtung nach einem der Ansprüche 1 oder 2, **dadurch gekennzeichnet, dass** die Feststellelemente (10; 20; 31, 32; 47) elastisch sind.

4. Vorrichtung nach einem der Ansprüche 1 bis 3, **dadurch gekennzeichnet, dass** die an der feststehenden (3) und beweglichen Struktur (6) befestigten Führungselemente (5,7) ineinander gleiten.

5. Vorrichtung nach einem der Ansprüche 1 bis 4, **dadurch gekennzeichnet, dass** die feststehende (3) und die bewegliche Struktur (6) durch eine Rückstellfeder (17) verbunden sind.

6. Vorrichtung nach einem der Ansprüche 1 bis 5, **dadurch gekennzeichnet, dass**
mindestens ein Feststellelement eine oder mehrere voneinander getrennte Blattfedern (10) aufweist, von denen ein freies Ende auf einer Platte (11) aufliegt, die mit der transversal beweglichen Struktur (6) einstückig bzw. fest verbunden ist und deren anderes Ende mit der feststehenden Struktur (3) über ein Gelenk (12) und dessen Lager (13) fest verbunden ist,
wobei die Regelvorrichtung so viele Stäbe (14) aufweist wie es Blätter (10) gibt, die mit mindestens einem ihrer Enden starr an dem Steuerelement befestigt sind, das eine zur Hauptachse der Brennstoffanordnungen parallele Strebe (15) umfasst ,die in dieser Richtung verschiebbar ist und am zugänglichen Ende der Zelle mündet, wobei sich jeder der Stäbe (14) auf einer Blattfeder (10) abstützt.

7. Vorrichtung nach Anspruch 6, **dadurch gekennzeichnet, dass** die Strebe (15) innerhalb eines mit der feststehenden Struktur (3) einstückigen bzw. fest verbundenen Profilteils (16) gleitet.

8. Vorrichtung nach einem der Ansprüche 1 bis 5, **dadurch gekennzeichnet, dass** mindestens ein Feststellelement eine gekrümmte Blattfeder (20) langgestreckter Form aufweist, die in Längsrichtung angeordnet ist, eine der transversal beweglichen Struktur (6) zugewandte konvexe Seite aufweist und auf eine Regelvorrichtung drückt, die eine Rolle (22) umfasst, welche über ein Lager (23) an der beweglichen Struktur (6) befestigt ist,
wobei das Steuerelement ein in Längsrichtung gleitendes Auflager (21) umfasst, das am zugänglichen Ende der Zelle mündet und an der feststehenden Struktur (3) anliegt, wobei die Blattfeder (20) über eines ihrer zwei Enden an dem Auflager (21) befestigt ist und ihr anderes Ende frei ist und auf dem Auflager (21) aufliegt.

9. Vorrichtung nach einem der Ansprüche 1 bis 5, **dadurch gekennzeichnet, dass**
mindestens ein Feststellelement mindestens ein Paar Schwenkarme umfasst, von denen einer "feststehend" (31) und der andere "beweglich" (32) ist, wobei deren eines Ende mittels eines Gelenks an einem in Längsrichtung beweglichen Muffenstück (33) befestigt ist, und das andere Ende des "feststehenden" Schwenkarms (31) mit der feststehenden Struktur (3) über ein Gelenk fest verbunden ist, und wobei das andere Ende des sogenannten "beweglichen" Schwenkarms (32) an der beweglichen Struktur (6) über ein Gelenk befestigt ist und die Schwenkarme (31, 32) derart positioniert sind, dass sie ein V eines variablen Winkels bilden,
das Steuerelement (34) mit der feststehenden Struktur (3) einstückig bzw. fest verbunden ist und eine Betätigung des Muffenstücks (33) in Längsrichtung über das zugängliche Ende der Zelle ermöglicht.

10. Vorrichtung nach Anspruch 9, **dadurch gekennzeichnet, dass** das Steuerelement eine Endlosschraube bzw. Schnecke (34) umfasst, die in ihrer Längsrichtung gelagert ist und mit einem in einen Axialdurchgang des Muffenstücks (33) geschnittenen Innengewinde zusammenwirkt.

11. Vorrichtung nach einem der Ansprüche 1 bis 5, **dadurch gekennzeichnet, dass** die transversalen Führungselemente (5, 7) und die regelbaren Feststellmittel (8) kombiniert sind.

12. Vorrichtung nach den Ansprüchen 9, 11, **dadurch gekennzeichnet, dass** die kombinierten transversalen Führungsund Feststellmittel eine mit den Schwenkarmen (31, 32) einstückige bzw. fest verbundene Vorrichtung umfassen, die mit dem Steuerelement (34) zusammenwirkt, um dem von den Schwenkarmen (31, 32) gebildeten V einen Winkel zu geben, der eine Funktion der Position des Muffenstücks (33) ist.

13. Vorrichtung nach Anspruch 11, **dadurch gekennzeichnet, dass** die kombinierten Führungselemente und regelbaren Feststellelemente umfassen:
einen Körper eines Hubzylinders (41) mit transversaler Achse, der mit der feststehenden Struktur (3) einstückig bzw. fest verbunden ist und in seiner Achse eine Führungsstange (42) aufweist, in die ein Zuführkanal (43) für komprimierte Luft gebohrt ist, der an deren freiem Ende mündet, und mehrere zylindrische Kammern (46) an seinem Umfang, mit einer zu dem Hubzylinder parallelen Achse, wobei jede der Kammern (46) eine Druckfeder (47) aufweist,
einen feststehenden Kolben (44), der mit dem freien Ende der Führungsstange (42) einstückig bzw. fest verbunden ist und an seinem Umfang eine Dichtung (45) aufweist,
einen mit der beweglichen Struktur (6) einstückigen bzw.
fest verbundenen, beweglichen Federteller (48), der im Inneren des Hubzylinderkörpers (41) gelegen und an die Form des Zylinderkörpers angepasst ist, wobei dieser Federteller zwischen den feststehenden Kolben (44) und den
Zylinderkörper (41) eingefügt ist und längs der Führungsstange (42) mittels einer entsprechenden Bohrung gleitet, die in den Federteller (48) eingebracht ist, wobei der Federteller außerdem an seinem Umfang mehrere Lageranordnungen (49) aufweist, welche genau angepasst an jede der Kammern (46) passen, die sich transversal in Bezug auf die große Länge der Brennstoffanordnung bewegen,
ein Zuführmittel komprimierten Gases, das an dem zugänglichen Ende der Zelle mündet und das Gas in den zwischen dem feststehenden Kolben (44) und dem beweglichen Federteller (48) gelegenen Raum über den Kanal (43) zuführt,
wobei die Federn (47) das Feststellen der beweglichen Struktur an der Brennstoffanordnung gewährleisten.

14. Vorrichtung nach einem der Ansprüche 1 bis 5, **dadurch gekennzeichnet, dass** das regelbare Feststellmittel (8) ein Steuerelement aufweist, das außen an der Zelle mündet, an der Nocken bzw. Steuerkurven befestigt sind, die auf der beweglichen Struktur (6) aufliegen.

15. Zelle für die Unterbringung einer Anordnung nuklearen Brennstoffs, **dadurch gekennzeichnet, dass** sie mit einer oder mehrerer Feststellvorrichtungen gemäß den Ansprüchen 1 bis 14 ausgestattet ist.

16. Transportbehälter von Anordnungen nuklearer Brennstoffe, **dadurch gekennzeichnet, dass** er mehrere Zellen gemäß Anspruch 15 umfasst.
